Europäisches Patentamt

European Patent Office

Office européen des brevets

(19)

(11) Numéro de publication: **0 025 246**
**B1**

(12) **FASCICULE DE BREVET EUROPEEN**

(45) Date de publication du fascicule du brevet: **14.12.83**

(21) Numéro de dépôt: **80200808.6**

(22) Date de dépôt: **28.08.80**

(51) Int. Cl.³: **C 09 K 3/28,** C 08 K 3/00, C 01 G 30/00

(54) Procédé pour préparer une composition ignifuge à partir d'antimoniate de sodium et composition ainsi obtenue.

(30) Priorité: **05.09.79 LU 81649**

(43) Date de publication de la demande:
**18.03.81 Bulletin 81/11**

(45) Mention de la délivrance du brevet:
**14.12.83 Bulletin 83/50**

(84) Etats contractants désignés:
**BE CH DE FR GB IT LI NL SE**

(56) Documents cités:
**FR - A - 2 066 396**
**FR - A - 2 071 855**
**FR - A - 2 166 018**
**US - A - 3 723 139**
**US - A - 4 110 247**

Le dossier contient des informations techniques présentées postérieurement au dépôt de la demande et ne figurant pas dans le présent fascicule.

(73) Titulaire: **METALLURGIE HOBOKEN-OVERPELT**
**Société anonyme dite:**
**8, rue Montagne du Parc**
**B-1000 Bruxelles (BE)**

(72) Inventeur: **Contin, Fulvio**
**Pastoor Deconincklaan 5**
**B-2610 Wilrijk (BE)**

(74) Mandataire: **Saelemaekers, Juul et al,**
**METALLURGIE HOBOKEN-OVERPELT A.**
**Greinerstraat 14**
**B-2710 Hoboken (BE)**

Courier Press, Leamington Spa, England.

### Procédé pour préparer une composition ignifuge à partir d'antimoniate de sodium et composition ainsi obtenue

La présente invention se rapporte à un procédé pour préparer une composition ignifuge à partir d'antimoniate de sodium.

Un tel procédé est connu par les brevets US—A—3.892.667 et 3.897.389. Selon ce procédé connu, on broie l'antimoniate de façon à obtenir un antimoniate très fin qui constitue alors la composition ignifuge.

Ce procédé connu présente l'inconvénient de se prêter mal au traitement d'antimoniates de sodium obtenus à haute température tels l'antimoniate obtenu en tant que sous-produit au raffinage alcalin du plomb selon le procédé Harris, de tels antimoniates étant très résistants à l'écrasement et, partant, difficilement broyables.

Le fait que la composition ignifuge obtenue par ce procédé connu est constituée essentiellement d'antimoniate de sodium et est exempte d'oxyde d'antimoine, est également désavantageux, étant donné qu'un mélange d'antimoniate de sodium et d'oxyde d'antimoine possède de meilleures propriétés ignifuges que l'antimoniate de sodium tel quel (voir brevet US—A—3.723.139).

Le but de la présente invention est de procurer un procédé qu évite les inconvénients ci-dessus.

Selon l'invention, on transforme au moins 60 % et, de préférence, au moins 95 % de l'antimoniate en oxyde d'antimoine pentavalent au moyen d'une solution acide, en produisant ainsi um mélange constitué d'oxyde d'antimoine pentavalent et d'antimoniate de sodium, on sépare le mélange ainsi produit de la solution, on sèche et on pulvérise ce mélange.

Il est à remarquer qu'un procédé pour préparer une composition ignifuge à partir d'antimoniate de sodium, comportant un traitement de l'antimoniate par une solution acide, est déjà connu par le document FR—A—2 066 396. Selon ce procédé connu, on broie l'antimoniate de façon à obtenir un antimoniate très fin et on neutralise cet antimoniate broyé avec une solution acide, le produit neutralisé ainsi obtenu constituant alors la composition ignifuge. Ce procédé connu présente, tout comme le procédé décrit dans les brevets US—A—3 892 667 et US—A—3 897 389 susmentionnées, l'inconvénient de se prêter mal au traitement d'antimoniates obtenus à haute température (procédé Harris de raffinage du plomb).

Il est également à remarquer qu'il est déjà connu par le brevet US—A—4 110 247 de transformer une suspension aqueuse d'antimoniate de sodium par traitement avec une résine cationique sous forme $H^+$ en un sol colloïdale d'oxyde d'antimoine pentavalent et de sécher ce sol dans un séchoir-atomiseur.

Comme antimoniate de départ, on peut utiliser dans le procédé de l'invention tout antimoniate de sodium, qu'il soit obtenu à haute température (procédé Harris de raffinage du plomb) ou par voie humide.

On peut utiliser toute solution acide qui réagit avec de l'antimoniate de sodium pour former de l'oxyde d'antimoine. Pour des raisons économiques on utilise cependant, de préférence, une solution aqueuse d'acide chlorhydrique et/ou d'acide sulfurique et/ou d'acide nitrique, d'une concentration comprise avantageusement entre 1 et 5 N.

Quant au rapport antimoniate: acide à mettre en oeuvre, il va de soi que celui-ci dépend de la fraction de l'antimoniate que l'on désire transformer en oxyde. Avantageusement, on fait réagir l'antimoniate avec une quantité d'acide allant de 1 à 1,35 fois la quantité stoechiométrique.

La réaction peut être effectuée à une température quelconque entre le point de congélation et la point d'ébullition de la solution acide, mais elle est effectuée, de préférence, à la température ambiante (18 à 25°C), parce que d'une part il est avantageux de transformer l'antimoniate autant que possible en oxyde et que d'autre part, il a été trouvé que pour en même rapport antimoniate: acide et une même durée de réaction le taux de transformation de l'antimoniate en oxyde est beaucoup plus élevé à la température ambiante qu'à haute température.

Quant à la durée de réaction, celle-ci est, de préférence, suffisante pour que la réaction puisse atteindre l'equilibre. Une durée de 1 à 3 heures s'est avérée satisfaisante.

La réaction est avantageusement effectuée en mettant l'antimoniate de sodium en suspension dans la solution acide. La teneur en antimoniate de sodium de la suspension est, de préférence, supérieure à 200 g/l; autrement, les frais d'exploitation du procédé deviennent trop élevés. Cette teneur est, de préférence, inférieure à 900 g/l, lorsque'on utilise une solution d'acide sulfurique, et inférieure à 750 g/l, lorsqu'on utilise une solution d'acide chlorhydrique ou d'acide nitrique, parce qu'autrement, la suspension devient pâteuse.

Le mélange d'oxyde d'antimoine et d'antimoniate résultant de cette réaction en suspension est alors séparé de la solution, par exemple par filtration, et lavé d'abord avec une solution diluée d'un acide minéral, de préférence de 1 à 4 N, et ensuite avec suffisamment d'eau pour éliminer l'acide. Si on lave directement à l'eau, la teneur en sodium du produit obtenu augmente sensiblement.

Le séchage et la pulvérisation du mélange lavé peuvent être effectués simultanément. C'est ainsi que l'on obtient directement une poudre, qui passe pratiquement dans son entièreté le tamis de 325 mailles, lorsqu'on traite le mélange lavé dan un séchoir-atomiseur. Il est à noter que la grosseur des grains d'une poudre ayant passé le tamis de 325 mailles est inférieure à 44 $\mu$m.

Le séchage et la pulvérisation du mélange lavé peuvent également être effectués consécutivement. C'est ainsi que l'on peut d'abord sécher le mélange lavé, par exemple dans une étuve, et ensuite désintégrer le mélange séché, par exemple dans un broyeur à marteaux; de cette façon, on obtient également une poudre, qui passe pratiquement dans son entièreté le tamis de 325 mailles. Si on désire obtenir une poudre plus fine, on traitera le mélange séché dans un moulin à jets d'air, en produisant ainsi une poudre constituée de particules dont le spectre granulométrique est très étroit (0 à 2 $\mu$m) et dont la grosseur moyenne des grains est égale à environ 1 $\mu$m.

Il est évident que, lorsqu'on effectue la pulvérisation dans un appareil qui n'est auto-classifiant, tel le séchoir-atomiseur ou le broyeur à marteaux, il est très utile de tamiser le produit pulvérisé. La Demanderesse recommande dans ce cas de tamiser sur un tamis de 325 mailles, parce que, comme déjà dit plus haut, il est très facile d'obtenir par le procédé de la présente invention un produit passant pratiquement dans son entièreté un tel tamis et parce qu'il est généralement admis que les propriétés ignifuges d'un produit ignifuge s'améliorent avec la finesse du produit. Cette recommandation n'implique toutefois pas que la mise en oeuvre dans le procédé de la présente invention d'un tamis moins fin, de par exemple 100 mailles, mènerait à un produit de qualité inadmissible.

Lorsque l'antimoniate de départ contient des impuretés colorantes telles sélénium, et tellure, on ajoute avantageusement à la suspension un agent oxydant, de préférence du peroxyde d'hydrogène, en quantité suffisante pour mettre ces impuretés en solution. Très souvent, il suffit d'ajouter environ 5 cc de $H_2O_2$ à 30—35 % pour 1000 g d'antimoine contenu.

L'invention concerne également les compositions ignifuges obtenues par le procédé suivant l'invention ainsi que les produits ignifugés par addition de ces compositions ignifuges.

Les exemples suivants feront mieux comprendre le procédé de l'invention et ses avantages. Ces exemples illustrent également des compositions ignifuges obtenues par ce procédé, ainsi que des produits ignifugés par addition de ces compositions.

Dans tous ces exemples, la matière de départ est un antimoniate de sodium humide obtenu comme sous-produit dans une installation de raffinage du plomb selon la procédé de Harris.

Cet antimoniate humide (10 à 12 % en poids d'eau) contient à l'état sec, en % en poids: 48,8 Sb; 9,32 Na; 21,88 $H_2O$ de cristallisation.

### Exemple 1

Cet exemple concerne la préparation d'une composition ignifuge à partir de la matière de départ susdite (antimoniate ex Harris) par le procédé de l'art antérieur mentionné ci-dessus et consistant à broyer l'antimoniate de façon à obtenir un antimoniate très fin.

La matière de départ est d'abord séchée et ensuite calcinée à 280° pendant 4 heures pour en chasser la majeure partie de l'eau de cristallisation.

L'antimoniate calciné, qui contient 57,74 % en poids d'antimoine, est alors pulvérisé dans un moulin à jets d'air type MC-200 KX de la firme Micro Grinding Ltd. de Suisse. On opère avec une pression de 6,5 bar et l'appareil, qui est auto-classifiant, débite 5 kg de poudre par heure (grosseur moyenne des grains: 1 $\mu$m).

Les propriétés ignifuges de cette poudre sont évaluées par la méthode standardisée de la détermination de l'indice d'oxygène.

On a jouté 5,8 % en poids de cette poudre à une matière plastique constituée de 100 parties de PVC (Solvic 271 GA de la firme Solvay), 36 parties de dioctylphtalate, 5 parties de sulfate tribasique de plomb et 1 partie de stéarate de calcium. Cette matière présente un indice d'oxygène de 30,3.

Si on remplace dans cette matière les 5,8 % de la poudre d'antimoniate par 4 % de $Sb_2O_3$ ignifuge du commerce (qualité "Blue Star P CMC" de la firme "Compagnie Chimique et Métallurgique Campine" de Belgique; 83,53 % Sb) en produisant ainsi la même teneur en Sb, on obtient un indice d'oxygène de 32,3.

Lorsqu'on ajoute 11,6 % de la poudre d'antimoniate à une matière plastique constituée de 89 parties de polyester (qualité "S.333" de BASF), de 2 parties de Butanox et de 1 partie d'octoate de cobalt, on obtient un indice d'oxygène de 26,1. En remplaçant dans cette matière les 11,6 % de la poudre d'antimoniate par 8 % du $Sb_2O_3$ ignifuge du commerce susdit, on obtient un indice d'oxygène de 27,4.

### Exemple 2

Cet exemple concerne la préparation d'une composition ignifuge à partir de la matière de départ susdite (antimoniate ex Harris) par le procédé de la présente invention.

On met 8 kg d'antimoniate humide en suspension dans une solution constituée de 4 l d'eau, 1,360 l de HCl 12 N et 0,68 l de $H_2SO_4$ 36 N. On ajoute à cette suspension 0,02 l de $H_2O_2$ à 30 %. Après 3 heures de réaction à la température ambiante (18°C), on filtre la suspension. On lave la gâteau de filtration avec 13,4 l d'une solution aqueuse á 0,05 l de $H_2SO_4$ 36 N et 0,1 l de HCl 12 N par litre et ensuite avec 22,3 l d'eau.

On sèche le gâteau lavé dans une étuve. On obtient 5,2 kg de produit sec titrant 63,81 % de Sb, 0,18 % de Cl et 0,08 % de Na. Ce produit contient 0,67 % en poids de NaSbO_3 et 99,33 % en poids de $Sb_2O_5$ (valeurs calculées).

Ce produit est pulvérisé dans le moulin à jets d'air de l'exemple 1, à une pression de 6,5 bar. L'appareil débite 30 kg de poudre par heure.

Lorsqu'on ajoute 5,2 % en poids de cette poudre à la matière plastique à base de PVC de l'exemple 1 en produisant ainsi une matière à base de PVC ayant la même teneur en Sb que celles de l'exemple 1, on obtient une matière qui présente un indice d'oxygène de 32,1.

Lorsqu'on ajoute 10,5 % en poids de ladite poudre à la matière plastique à base de polyester de l'exemple 1, en produisant ainsi une matière à base de polyester ayant la même teneur en Sb que celles de l'exemple 1, on obtient une matière qui présente un indice d'oxygène de 28,5.

Lorsqu'on compare les données des exemples 1 et 2, on voit que:

1°) un mélange d'oxyde d'antimoine pentavalent et d'antimoniate de sodium, obtenu par traitement à l'acide d'antimoniate de sodium, peut être beaucoup plus facilement plulvérisé que l'antimoniate de sodium dont il provient,

2°) à finesse égale, ce mélange présente des propriétés ignifuges qui sont supérieures à celles de l'antimoniate de sodium.

3°) les propriétés ignifuges du produit de l'exemple 2 sont comparables à celles du $Sb_2O_3$ ignifuge du commerce pour ce qui concerne l'ignifugation des matières à base de PVC, et supérieures à celles du $Sb_2O_3$ ignifuge du commerce pour ce qui concerne l'ignifugation des matières à base de polyesters.

### Exemple 3

Cet exemple concerne, comme l'exemple 2, la l'préparation d'une composition ignifuge à partir de la matière de départ susdite (antimoniate ex Harris) par le procédé de la présente invention.

On met 7,15 kg d'antimoniate humide en suspension dans une solution constituée de 4,3 l d'eau et de 2,86 l de HCl 12 N. On agite pendant 3 heures à la température ambiante (18°C). On filtre et on lave le gâteau de filtration avec 12,45 litres d'une solution aqueuse à 0,16 l de HCl 12 N par litre et ensuite avec 20,9 l d'eau. On sèche le gâteau lavé dans une étuve. On obtient 4,647 kg de produit sec titrant en % en poids: 61,74 Sb, 0,61 Na et 0,17 HCl. Ce produit contient 5,24 % en poids de $NaSbO_3$ et 94,76 % en poids de $Sb_2O_5$ (valeurs calculées). Après désintégration du produit séché dans un broyeur à marteaux, on le tamise sur un tamis de 325 mailles. La fraction ayant passé le tamis (99,7 %) est utilisée pour ignifuger la matière plastique à base de PVC des exemples 1 et 2. A cette matière plastique, on ajoute 5,4 % en poids de cette fraction ayant passé le tamis de 325 mailles en produisant ainsi une matière plastique à base de PVC ayant la même teneur en Sb que celles des exemples 1 et 2. Cette matière plastique présente un indice d'oxygène de 31,6. Quoique de 0,7 unités inférieur à celui obtenu dans l'exemple 2, cet indice, obtenu, à l'aide d'une composition ignifuge assez grossière, est encore de 1,3 unités supérieur à celui obtenu dans l'exemple 1 avec de l'antimoniate trés fin.

### Exemple 4

Cet exemple concerne également la préparation d'une composition ignifuge à partir de la matière de départ susdite (antimoniate ex Harris) par le procédé de la présente invention.

On met 9 kg d'antimoniate humide en suspension dans une solution constituée de 5 l d'eau et de 1,17 l de $H_2SO_4$ 36 N. On ajoute à la suspension 0.023 l de $H_2O_2$ à 30 % et on agite la suspension pendant 1 heure à 80°C. On filtre et on lave le gâteau de filtration avec 11,6 l d'une solution aqueuse à 0,06 l de $H_2SO_4$ 36 N par litre et ensuite avec 15,4 l d'eau. On sèche le gâteau lavé dans une étuve. On obtient 5,381 kg de produit sec titrant en % en poids: 61,78 Sb, 3,61 Na et 0,02 Cl. Ce produit contient 31 % en poids de $NaSbO_3$ et 69 % en poids de $Sb_2O_5$ (valeurs calculées).

Ce produit est pulvérisé dans le moulin à jets d'air de l'exemple 1, à une pression de 6,5 bar. L'appareil débite 30 kg de poudre par heure.

Lorsqu'on ajoute 5,4 % en poids de ce produit à la matière plastique à base de PVC de l'exemple 1 en produisant ainsi une matière à base de PVC ayant la même teneur en Sb que celles de l'exemple 1, on obtient une matière qui présente un indice d'oxygène de 31,7.

Lorsqu'on compare les données des exemples 2 et 4, on voit que la haute teneur en sodium ($NaSbO_3$) du produit obtenu dans l'exemple 4 semble avoir une influence défavorable sur les propriétés ignifuges de ce produit. Toutefois, l'indice d'oxygène de ce produit à haute teneur en sodium est encore de 1,4 unités supérieur à celui obtenu dans l'exemple 1 avec de l'antimoniate très fin.

### Exemple 5

Dans cet exemple, on décrit deux essais comparatifs illustrant l'influence de la température de réaction sur la teneur en sodium du produit obtenu par le procédé de l'invention.

Dans un premier essai, on met 0,85 kg d'antimoniate humide en suspension dans une solution constituée de 0,5 l d'eau et de 0,34 l de HCl 12 N. on agite la suspension pendant 1 heure à 80°C. On filtre et on lave le gâteau de filtration avec 0,54 l de HCl 1,5 N et ensuite 0,9 l d'eau. On sèche le gâteau lavé dans une étuve. On obtient 0,593 kg de produit sec titrant en % en poids: 60 Sb, 4,43 Na et 1,03 Cl. Ce produit contient 39,1 % en poids de $NaSbO_3$, et 60,9 % de $Sb_2O_5$ (valeurs calculées).

Dans le second essai, on opère de la même façon si ce n'est que l'on effectue la réaction à la température ambiante. On obtient 0,57 kg de produit sec titrant en % en poids: 64,9 Sb, 0,7 Na et 0,27 Cl. Ce produit contient 5,7 % en poids de $NaSbO_3$ et 94,3 % en poids de $Sb_2O_5$ (valeurs calculées).

Dans le procédé de l'invention, il importe donc d'opérer à la température ambiante pour obtenir un produit à faible teneur en sodium.

Exemple 6

Dans cet exemple, on décrit deux essais comparatifs illustrant l'influence des conditions de lavage du gâteau de filtration sur la teneur en sodium du produit obtenu par le procédé de l'invention.

On met 0,85 kg d'antimoniate humide en suspension dans une solution constituée de 0,5 l d'eau et de 0,34 l de HCl 12 N. On agite la suspension pendant 4 heures à la température ambiante (19°C). On devise alors la suspension en deux portions à peu près égales.

On filtre la première portion et on lave le gâteau de filtration avec 1,27 l d'eau. On sèche le gâteau lavé dans une étuve. On obtient 0,252 kg de produit sec titrant en % en poids: 63 Sb, 1,92 Na et 0,3 Cl. Ce produit contient 16,1 % en poids de $NaSbO_3$ et 83,9 % en poids de $Sb_2O_5$ (valeurs calculées).

On filtre la seconde portion et on lave le gâteau de filtration d'abord avec 0,45 l d'une solution aqueuse à 0,16 l de HCl 12 N par litre et ensuite avec 1,13 l d'eau. On sèche le gâteau lavé dans une étuve. On obtient 0,294 kg de produit sec titrant en % en poids: 63,48 Sb, 0,43 Na et 0,18 Cl. Ce produit contient 3,6 % en poids de $NaSbO_3$ et 96,4 % en poids de $Sb_2O_5$ (valeurs calculées).

Dans le procédé de l'invention, il importe donc de laver le gâteau de filtration d'abord avec une solution acide pour obtenir un produit à fable teneur en sodium.

Il est à noter que dans les exemples 2 à 6 décrits ci-dessus, on a retrouvé dans le produit final plus de 96 % de l'antimoine mise en oeuvre au départ, ce qui veut dire que dans le procédé de l'invention les pertes d'antimoine sont très faibles.

Il est également à noter que l'antimoniate ex Harris utilisé comme matière de départ dans ces exemples, est un aitmoniate obtenu à haute température et par conséquent peu réactif. Il va donc de soi que l'on peut traiter par le procédé de la présente invention tout antimoniate de sodium, qu'il soit obtenu à haute température ou par voie humide.

**Revendications**

1. Procédé pour préparer une composition ignifuge à partir d'antimoniate de sodium, comportant un traitement de l'antimoniate par une solution acide, caractérisé en ce qu'on transforme au moins 60 % de l'antimoniate en oxyde d'antimoine pentavalent au moyen de ladite solution acide, en produisant ainsi un mélange constitué d'oxyde d'antimoine pentavalent et d'antimoniate de sodium, on sépare le mélange ainsi produit de la solution, on sèche et on pulvérise ce mélange.

2. Procédé selon la revendication 1, caractérisé en ce qu'on utilise en tant que solution acide, une solution aqueuse d'acide chlorhydrique et/ou d'acide sulfurique et/ou d'acide nitrique.

3. Procédé selon la revendication 2, caractérisé en ce que la concentration de la solution acide est comprise entre 1 et 5 N.

4. Procédé selon la revendication 1, 2 ou 3, caractérisé en ce qu'on fait réagir l'antimoniate de sodium avec une quantité d'acide allant de 1 à 1,35 fois la quantité stoechiométrique.

5. Procédé selon l'une quelconque des revendications précédentes, caractérisé en ce qu'on transforme au moins 95 % de l'antimoniate en oxyde.

6. Procédé selon l'une quelconque des revendications précédentes, caractérisé en ce qu'on met l'antimoniate de sodium en suspension dans la solution acide, la teneur en antimoniate de sodium de la suspension étant de 200 à 900 g/l.

7. Procédé selon l'une quelconque des revendications précédentes, caractérisé en ce qu'on effectue la réaction à la température ambiante.

8. Procédé selon l'une quelconque des revendications précédentes, caractérisé en ce qu'on lave le mélange, séparé de la solution, d'abord avec une solution acide diluée et ensuite avec de l'eau.

9. Procédé selon l'une quelconque des revendications précédentes, caractérisé en ce qu'on utilise de l'antimoniate de sodium contenant des impuretés colorantes et on ajoute à la solution 5 cc de $H_2O_2$ à 30—35 % pour 1000 g d'antimoine contenu.

10. Procédé selon l'une quelconque des revendications précédentes, caractérisé en ce qu'on utilise comme antimoniate de sodium de départ, de l'antimoniate obtenu à haute température (procédé Harris de raffinage du plomb).

11. Procédé selon la revendication 10, caractérisé en ce qu'on utilise l'antimoniate de sodium obtenu comme sous-produit au raffinage alcalin de plomb antimonifère.

12. Composition ignifuge constituée d'un mélange d'oxyde d'antimoine pentavalent et d'antimoniate de sodium, caractérisé en ce que ce mélange est obtenu en faisant réagir de l'antimoniate de sodium avec de l'acide selon le procédé des revendications 1—11.

13. Composition selon la revendication 12, caractérisé en ce qu'elle contient au moins 95 % en poids de $Sb_2O_5$.

14. Produit ignifugé par addition d'un mélange d'oxyde d'antimoine pentavalent et d'antimoniate de sodium, caractérisé en ce que ce mélange est obtenu en faisant réagir de l'antimoniate de sodium avec de l'acide selon le procédé des revendications 1—11.

15. Produit selon la revendication 14, caractérisé en ce que le mélange contient au moins 95 % en poids de $Sb_2O_5$.

16. Produit selon la revendication 14 ou 15, caractérisé en ce qu'il est à base de chlorure de polyvinyl.

17. Produit selon la revendication 14 ou 15, caractérisé en ce qu'il est à base de polyester.

## Patentansprüche

1. Verfahren zur Herstellung einer feuerhemmenden Zusammensetzung ausgehend von Natriumantimonat, wobei das Antimonat mit einer sauren Lösung behandelt wird, dadurch gekennzeichnet, daß man mindestens 60% des Antimonats mittels dieser sauren Lösung in fünfwertiges Antimonoxide umwandelt, wodurch man ein Gemisch bestehend aus fünfwertigem Antimonoxid und Natriumantimonat herstellt und daß man dieses Gemisch von der Lösung trennt, dann trocknet und pulveriziert.

2. Verfahren nach Anspruch 1, dadurch gekennzeichnet, daß man als saure Lösung eine wäßrige Lösung von Salzsäure und/oder Schwefelsäure und/oder Salpetersäure verwendet.

3. Verfahren nach Anspruch 2, dadurch gekennzeichnet, daß die Konzentration der sauren Lösung zwischen 1 n und 5 n liegt.

4. Verfahren nach Anspruch 1, 2 oder 3, dadurch gekennzeichnet, daß man das Natriumantimonat mit einer Menge Säure reagieren läßt, die das 1-bis 1,35-fache der stöchiometrischen Menge beträgt.

5. Verfahren nach einem der vorhergehenden Ansprüche, dadurch gekennzeichnet, daß man mindestens 95 % des Antimonats in Oxid umwandelt.

6. Verfahren nach einem der vorhergehenden Ansprüche, dadurch gekennzeichnet, daß man das Natriumantimonat in der sauren Lösung in Suspension bringt und der Gehalt an Natriumantimonat in der Suspension 200 bis 900 g/l beträgt.

7. Verfahren nach einem der vorhergehenden Ansprüche, dadurch gekennzeichnet, daß man die Reaktion bei Raumtemperatur durchführt.

8. Verfahren nach einem der vorhergehenden Ansprüche, dadurch gekennzeichnet, daß man das von der Lösung getrennte Gemisch zuerst mit einer verdünnten sauren Lösung und dann mit Wasser wäscht.

9. Verfahren nach einem der vorhergehenden Ansprüche, dadurch gekennzeichnet, daß man Natriumantimonat verwendet, das färbende Verunreinigungen enthält und daß man der Lösung 5 ccm 30—35 %iges $H_2O_2$ pro 1000 g Antimongehalt zufügt.

10. Verfahren nach einem der vorhergehenden Ansprüche, dadurch gekennzeichnet, daß man als einzusetzendes Natriumantimonat ein bei hoher Tenperatur erhaltenes Antimonat (Harris-Verfahren zur Raffination von Blei) verwendet.

11. Verfahren nach Anspruch 10, dadurch gekennzeichnet, daß man ein Natriumantimonat verwendet, das als Nebenprodukt bei der alkalischen Raffination von antimonhaltigem Blei gewonnen wurde.

12. Feuerhemmende Zusammensetzung bestehend aus einem Gemisch von fünfwertigem Antimonoxid und Natriumantimonat, dadurch gekennzeichnet, daß dieses Gemisch durch Reaktion von Natriumantimonat mit Säure gemäß dem Verfahren der Ansprüche 1 bis 11 hergestellt ist.

13. Zusammensetzung nach Anspruch 12, dadurch gekennzeichnet, daß sie midestens 95 Gem.% $Sb_2O_5$ enthält.

14. Produkt, das durch Zusatz eines Gemisches von fünfwertigem Antimonoxid und Natriumantimonat feuerhemmend gemacht ist, dadurch gekennzeichnet, daß dieses Gemisch durch Reaktion von Natriumantimonat mit Säure gemäß dem Verfahren der Ansprüche 1 bis 11 hergestellt ist.

15. Produkt nach Anspruch 14, dadurch gekennzeichnet, daß das Gemisch mindestens 95 Gew.% $Sb_2O_5$ enthält.

16. Produkt nach Anspruch 14 oder 15, dadurch gekennzeichnet, daß es auf Polyvinylchlorid basiert.

17. Produkt nach Anspruch 14 oder 15, dadurch gekennzeichnet, daß es auf Polyester basiert.

## Claims

1. A process for preparing a flame retardant composition from sodium antimonate, comprising a treatment of the antimonate with an acid solution, characterized in that at least 60% of the antimonate is transformed into pentavalent antimony oxide by means of said acid solution, thus producing a mixture of pentavalent antimony oxide and sodium antimonate, the so produced mixture is separated from the solution and that mixture is dried and pulverized.

2. A process according to claim 1, characterized in that an aqueous solution of hydrochloric acid and/or sulphuric acid and/or nitric acid is used as the acid solution.

3. A process according to claim 2, characterized in that the concentration of the acid solution is between 1 and 5 N.

4. A process according to claim 1, 2 or 3, characterized in that the sodium antimonate is made to react with an amount of acid ranging from 1 to 1.35 times the stoechiometric amount.

5. A process according to any of the preceding claims, characterized in that at least 95% of the antimonate is transformed into oxide.

6. A process according to any of the preceding claims, characterized in that the sodium antimonate is put in suspension in the acid solution, the sodium antimonate content of the suspension ranging from 200 to 900 g/l.

7. A process according to any of the preceding claims, characterized in that the reaction is carried out at the ambient temperature.

8. A process according to any of the preceding claims, characterized in that the mixture that has been separated from the solution is first washed with a diluted acid solution and then

11 0 025 246 12

with water.

9. A process according to any of the preceding claims, characterized in that use is made of a sodium antimonate containing colouring impurities and that 5 ml of $H_2O_2$ at 30—35% is added to that solution per 1.000 g of antimony.

10. A process according to any of the preceding claims, characterized in that sodium antimonate produced at high temperature (Harris process for lead refining) is used as the starting sodium antimonate.

11. A process according to claim 10, characterized in that use is made of the sodium antimonate produced as a by-product at the alkaline refining of antimoniferous lead.

12. A flame retardant composition consisting of a mixture of pentavalent antimony oxide and sodium antimonate, characterized in that the mixture is produced by causing sodium antimonate to react with acid according to the process of claims 1—11.

13. A flame retardant composition according to claim 12, characterized in that it contains at least 95% by weight of $Sb_2O_5$.

14. A product that has been made flameproof by the addition of a mixture of pentavalent antimony oxide and sodium antimonate, characterized in that said mixture is produced by causing sodium antimonate to react with acid according to the process of claims 1—11.

15. A product according to claim 14, characterized in that the mixture contains at least 95% by weight of $Sb_2O_5$.

16. A product according to claim 14 or 15, characterized in that it is based on polyvinylchloride.

17. A product according to claim 14 or 15, characterized in that it is based on polyester.